(19) Europäisches Patentamt
European Patent Office
Office européen des brevets

(11) EP 0 595 222 B1

(12) EUROPÄISCHE PATENTSCHRIFT

(45) Veröffentlichungstag und Bekanntmachung des Hinweises auf die Patenterteilung:
06.03.1996 Patentblatt 1996/10

(51) Int. Cl.$^6$: B66C 13/16, G01G 19/18, B66C 1/10, B66C 1/66

(21) Anmeldenummer: 93117185.4

(22) Anmeldetag: 22.10.1993

(54) **Hebevorrichtung für Lasten, insbesondere für Container**

Load lifting device, in particular for containers

Dispositif de levage de charges, en particulier pour des conteneurs

(84) Benannte Vertragsstaaten:
BE DE FR GB NL

(30) Priorität: 24.10.1992 DE 9214417 U

(43) Veröffentlichungstag der Anmeldung:
04.05.1994 Patentblatt 1994/18

(73) Patentinhaber:
• Koschinski, Ralf
  D-38678 Clausthal-Zellerfeld (DE)
• Koschinski, Paul
  D-22926 Ahrensburg (DE)

(72) Erfinder: Koschinski, Ralf
D-38678 Clausthal-Zellerfeld (DE)

(74) Vertreter: Glawe, Delfs, Moll & Partner
Patentanwälte
Liebherrstrasse 20
D-80538 München (DE)

(56) Entgegenhaltungen:
EP-A- 0 143 713        EP-A- 0 525 220
DE-A- 2 832 326        GB-A- 2 180 357
NL-A- 8 801 423        US-A- 3 645 406
US-A- 4 596 297        US-A- 4 984 644

## Beschreibung

Die Erfindung betrifft eine Hebevorrichtung für Lasten, insbesondere für Container, mit Traversen, an denen die im wesentlichen quaderförmige Last an ihren vier oberen Ecken angehängt wird.

Ein immer größerer Anteil des Güterverkehrs erfolgt mit Hilfe von Containern. Diese müssen häufig umgesetzt werden z. B. von Lastwagen auf Güterwagen der Eisenbahn, von Güterwagen auf Schiffe usw. Für diesen Zweck gibt es spezielle Hebevorrichtungen mit Traversen, an denen der Container an seinen vier oberen Ecken befestigt und dann hochgezogen wird.

Dabei muß natürlich eine Überlastung der Hebevorrichtung und eventuell auch des Transportmittels (z.B. Lastkraftwagen) vermieden werden. Dies geschieht im allgemeinen dadurch, daß die Höchstbelastbarkeit des Containers vorgegeben ist und die tatsächliche Belastung bzw. das tatsächliche Gewicht deklariert werden muß. Dabei können natürlich Fehler auftreten, so daß infolge einer Überlastung der Hebevorrichtung und/oder Transportfahrzeuge oder dgl. Schäden auftreten. Es besteht auch die Gefahr, daß die Last ungleichförmig im Container angeordnet ist, da der Container ursprünglich ungleichmäßig geladen wurde oder aber da die Last verrutscht ist. In beiden Fällen wird wegen der ungleichmäßigen Gewichtsverteilung nicht nur die Hebevorrichtung besonders belastet, es können vielmehr auch beim anschließenden Transport Probleme auftreten. Die Tatsache der Überlast oder der ungleichförmigen Verteilung der Last wird dabei normalerweise erst festgestellt, wenn bereits ein Schaden aufgetreten ist, der beträchtlich finanzielle Folgen haben kann.

Die Aufgabe der Erfindung besteht in der Schaffung einer Hebevorrichtung, mit der die bei Übergewicht des Containers auftretenden Probleme vermieden werden können.

Die erfindungsgemäße Lösung besteht darin, daß die Traversen an ihren Aufhängungseinrichtungen, an denen die Last befestigt wird, mit Lastmeßeinrichtungen versehen sind. Sind die Traversen an ihren Aufhängungseinrichtungen, d.h. im allgemeinen dort befindlichen Bolzen, mit solchen Lastmeßeinrichtungen versehen, so müssen lediglich die an allen vier Lastmeßeinrichtungen gemessenen Kräfte addiert werden, um das Gesamtgewicht des Containers zu erhalten. Auf diese Weise kann einerseits geprüft werden, ob das Gewicht tatsächlich unterhalb der vorgegebenen Maximalgröße ist. Andererseits kann aber auch ein Vergleich mit dem deklarierten Gewicht durchgeführt werden, um die Tatsache einer falschen Deklarierung festzustellen. Dieses Messen des Gewichtes behindert dabei das Umsetzen der Container überhaupt nicht. Die entsprechenden Einrichtungen können auch leicht nachträglich an den Traversen oder Spreadern angebracht werden.

Als besonders zweckmäßig hat es sich erwiesen, wenn die Lastmeßeinrichtungen Dehnmeßstreifen sind.

Bei einer weiteren vorteilhaften Ausführungsform werden Kraftmeßdosen als Lastmeßeinrichtungen verwendet.

Wenn die Lastmeßeinrichtungen über Tiefpaßfilter mit einer Auswertungseinheit verbunden sind, so werden Lastspitzen durch ruckartige Bewegungen des Containers ausgefiltert, so daß nur das tatsächliche Gewicht bestimmt wird.

Wenn mit der Auswertungseinheit Differenzen der auf die einzelnen Lastmeßeinrichtungen wirkenden Kräfte anzeigbar sind, so kann leicht der Fall festgestellt werden, daß die Last an allen vier Eckpunkten nicht gleichförmig ist, die Waren im Container als ungleichmäßig angeordnet sind.

Die Signale der Lastmeßeinrichtungen sind besonders leicht auswertbar, wenn die Lastmeßeinrichtungen zur darauf wirkenden Kraft proportionale Spannungen abgeben.

Bei einer besonders einfachen und zweckmäßigen Ausführungsform werden in einer Analog-Warnschaltung die von der Ecken der kurzen Seiten der Last kommenden Spannungen der Meßeinrichtungen addiert und diese Summen voneinander subtrahiert, so daß man feststellen kann, wenn die Ladung ungleichförmig näher einer der kurzen Seiten angeordnet ist. Das Gleiche kann alternativ oder zusätzlich dazu mit der Summe der Spannungen durchgeführt werden, die von den Ecken der langen Seiten herrühren.

Zweckmäßigerweise führt man die resultierenden Spannungen einer Schwellwertschaltung zu, die einerseits einen sichtbaren oder hörbaren Alarm am Spreader oder einer Steuereinheit abgeben kann, wenn das zulässige Gesamtgewicht überschritten ist, und die andererseits ein Warnsignal gibt, wenn die Lasten ungleichförmig verteilt sind.

Die Meßergebnisse können auch an lokale Rechner oder einen zentralen Rechner weitergegeben werden, um so die Gewichtsdaten der einzelnen Container zu erfassen und ggf. zu koordinieren.

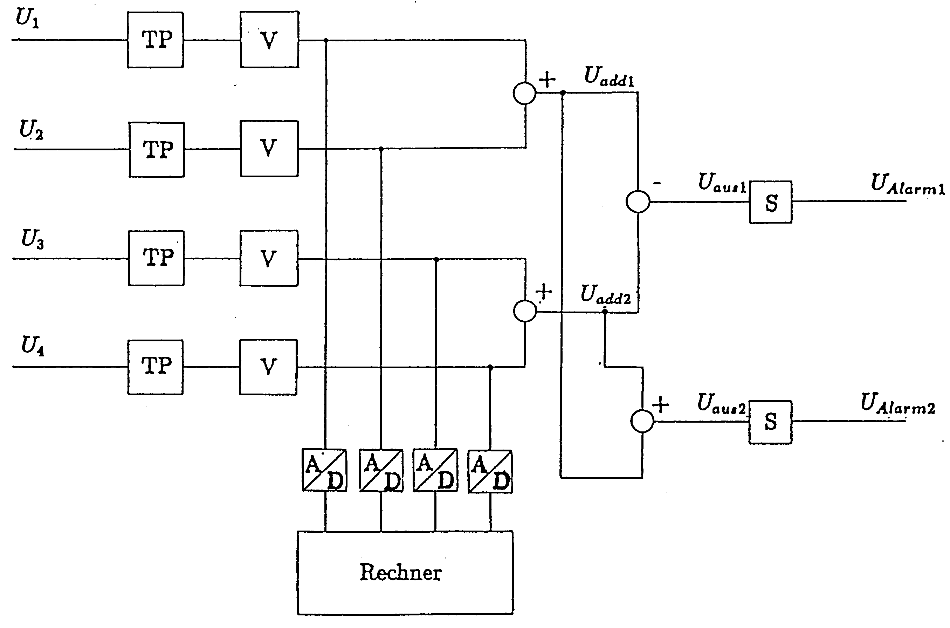

Die Erfindung wird im folgenden anhand einer vorteilhaften Ausführungsform unter Bezugnahme auf die beigefügte Zeichnung beschrieben, die schematisch das der Erfindung zugrunde liegende Prinzip zeigt.

An den Haltebolzen, an denen der Container hängt, werden Sensoren angebracht, die eine der anhängenden lastproportionale Spannung liefern (z.B. Brückenschaltungen mit Dehnmeßstreifen oder Kraftmeßdosen, die an den vier Ecken die Spannungen $U_1$ bis $U_4$ abgeben). Diese Signale werden zunächst durch Tiefpaßfilter TP geleitet, um Spannungsspitzen durch ruckartige Bewegungen des Containers auszufiltern. Anschließend erfolgt eine Verstärkung in Verstärkern V. Die verstärkten Signale können dann in Analog/Digitalwandler eingegeben werden und über eine entsprechende Interface-Schaltung an einen Rechner weitergeleitet werden, wo sie aufgearbeitet werden. Der Rechner kann dann auch Meldungen abgeben, wenn die Spannungen $U_1$ bis $U_4$ Abweichungen voneinander aufweisen, die über einen vorgegebenen Toleranzwert hinausgehen.

In der Figur ist eine besonders einfache Schaltung dargestellt, mit der solche Ungleichförmigkeiten der Lastverteilung detektiert werden können. Es handelt sich hier um eine einfache Analogschaltung, in der zunächst die Spannungen der Ecken des Containers addiert werden, die an denselben kurzen Seiten liegen. Es ergibt sich so

$$U_1 + U_2 = U_{Add1} \text{ und } U_3 + U_4 = U_{Add2}.$$

Die beiden resultierenden Spannungen werden zum einen voneinander subtrahiert ($U_{aus1}$) um ein Maß für die Ungleichverteilung der Last im Container zu erhalten, zum anderen miteinander addiert, um ein Maß für die Gesamtlast zu bekommen ($U_{aus2}$). Diese beiden Ausgangssignale $U_{aus1}$ und $U_{aus2}$ werden jeweils auf einen Schwellwertgeber gegeben, die bei Überschreiten einer bestimmten Eingangsspannung eine Alarmspannung abgeben, mit der dann ein akustischer und/oder optischer Alarm ausgelöst werden kann ($U_{Alarm1}$ und $U_{Alarm2}$).

Mit einer entsprechenden analogen Warnschaltung können auch die Lasten miteinander verglichen werden, die an den Ecken der langen Seiten festgestellt werden, so daß auch eine Verschiebung der Last zu einer der langen Seiten durch diese Schaltung festgestellt werden kann.

**Patentansprüche**

1. Hebevorrichtung für Lasten, insbesondere für Container, mit Traversen, an denen die im wesentliche quaderförmige Last an ihren vier oberen Ecken angehängt wird, dadurch gekennzeichnet, daß die Traversen an ihren Aufhängungseinrichtungen, an denen die Last befestigt wird, mit Lastmeßeinrichtungen versehen sind, und daß die Lastmeßeinrichtungen mit einer Auswertungseinheit verbunden sind, mit der Differenzen der auf die einzelnen Lastmeßeinrichtungen wirkenden Kräfte anzeigbar sind.

2. Hebevorrichtung nach Anspruch 1, dadurch gekennzeichnet, daß die Lastmeßeinrichtungen Dehnmeßstreifen aufweisen.

3. Hebevorrichtung nach Anspruch 1, dadurch gekennzeichnet, daß die Lastmeßeinrichtung Kraftmeßdosen aufweisen.

4. Hebevorrichtung nach einem der Ansprüche 1 bis 3, dadurch gekennzeichnet, daß die Lastmeßeinrichtungen über Tiefpaßfilter mit der Auswertungseinheit verbunden sind.

5. Hebevorrichtung nach einem der Ansprüche 1 bis 4, dadurch gekennzeichnet, daß die Lastmeßeinrichtungen eine zur darauf wirkenden Kraft proportionale Spannung abgeben

6. Hebevorrichtung nach Anspruch 5, dadurch gekennzeichnet, daß in einer Analog-Warnschaltung die von den Ecken der kurzen Seiten der Last kommenden Spannungen der Lastmeßeinrichtungen addiert und diese Summen voneinander subtrahiert werden.

7. Hebevorrichtung nach Anspruch 5 oder 6, dadurch gekennzeichnet, daß in einer Analog-Warnschaltung die von den Ecken der langen Seiten der Last kommenden Spannungen der Lastmeßeinrichtungen addiert und diese Summen voneinander subtrahiert werden.

8. Hebevorrichtung nach einem der Ansprüche 5 bis 7, dadurch gekennzeichnet, daß die resultierenden Spannungen einer Schwellwertschaltung zugeführt werden.

**Claims**

1. A lifting device for loads, in particular for containers, having crosspieces on which the substantially cuboid load is suspended at its four upper corners, characterized in that the crosspieces are provided with load-measuring means on their suspension means to which the load is secured, and in that the load-measuring means are connected to an evaluation unit by means of which differences in the forces acting on the individual load-measuring means can be displayed.

2. A lifting device according to Claim 1, characterized in that the load-measuring means have strain gauges.

3. A lifting device according to Claim 1, characterized in that the load-measuring means have load cells.

4. A lifting device according to one of Claims 1 to 3, characterized in that the load-measuring means are connected by way of low-pass filters to the evaluation unit.

5. A lifting device according to one of Claims 1 to 4, characterized in that the load-measuring means emit a voltage proportional to the force acting thereon.

6. A lifting device according to Claim 5, characterized in that the voltages of the load-measuring means coming from the corners of the short sides of the load are added in an analog warning circuit, and these totals are subtracted from one another.

7. A lifting device according to Claim 5 or 6, characterized in that the voltages of the load-measuring means coming from the corners of the long sides of the load are added in an analog warning circuit, and these totals are subtracted from one another.

8. A lifting device according to one of Claims 5 to 7, characterized in that the resulting voltages are fed to a threshold value circuit.

**Revendications**

1. Dispositif de levage de charges, en particulier de conteneurs, comprenant des traverses auxquelles la charge, de forme essentiellement parallélépipédique, est suspendue au niveau de ses quatre angles supérieurs, caractérisé en ce que les traverses, au niveau de leurs équipements de suspension auxquels la charge est suspendue, sont munies d'équipements de mesure de charge et en ce que les équipements de mesure de charge sont raccordées à une unité d'analyse à l'aide de laquelle peuvent être affichées des différences des forces agissant sur les équipements de mesure de charge individuels.

2. Dispositif de levage selon la revendication 1, caractérisé en ce que les équipements de mesure de charge comportent des jauges extensométriques.

3. Dispositif de levage selon la revendication 1, caractérisé en ce que les équipements de mesure de charge comportent des boîtes dynamométriques.

4. Dispositif de levage selon l'une des revendications 1 à 3, caractérisé en ce que les équipements de mesure de charge sont raccordés à l'unité d'analyse par le biais de filtres passe-bas.

5. Dispositif de levage selon l'une des revendications 1 à 4, caractérisé en ce que les équipements de mesure de charge délivrent une tension proportionnelle à la force qui agit sur eux.

6. Dispositif de levage selon la revendication 5, caractérisé en ce que, dans un circuit d'alarme analogique, les tensions des équipements de mesure de charge qui proviennent des angles des petits côtés de la charge sont additionnées et en ce que ces sommes sont soustraites entre elles.

7. Dispositif de levage selon la revendication 5 ou 6, caractérisé en ce que, dans un circuit d'alarme analogique, les tensions des équipements de mesure de charge qui proviennent des angles des grands côtés de la charge sont additionnées et en ce que ces sommes sont soustraites entre elles.

8. Dispositif de levage selon l'une des revendications 5 à 7, caractérisé en ce que les tensions résultantes sont conduites à un circuit de seuil.

EP 0 595 222 B1